# EUROPÄISCHE PATENTSCHRIFT

(11) **EP 0 643 473 B1**
(45) Veröffentlichungstag und Bekanntmachung des Hinweises auf die Patenterteilung: **29.04.1998**
(21) Anmeldenummer: 94114067.5
(22) Anmeldetag: 08.09.1994
(51) Int. Cl.: H02P 6/00, H02P 6/08, H02H 7/08

(54) **Anordnung mit einem über eine Halbleiteranordnung kommutierten kollektorlosen Gleichstrommotor**
Device for a collectorless dc motor commutated with a semiconductor device
Dispositif pour un moteur à courant continu sans collecteur commuté par un dispositif semi-conducteur

(30) Priorität: 15.09.1993 DE 9313948 U
(43) Veröffentlichungstag der Anmeldung: 15.03.1995
(73) Patentinhaber: PAPST-MOTOREN GmbH & Co. KG, 78106 St Georgen (DE)
(72) Erfinder: Karwath, Arno, D-78628 Rottweil (DE)

(56) Entgegenhaltungen:
- EP-A- 0 467 085
- DE-A- 2 538 835
- DE-A- 2 842 145
- DE-A- 3 145 248
- DE-U- 9 204 811
- US-A- 3 873 897
- US-A- 4 588 933

## Beschreibung

Die Erfindung betrifft eine Anordnung mit einem über eine Halbleiteranordnung kommutierten kollektorlosen Gleichstrommotor. Eine derartige Anordnung ist z.B. bekannt aus dem DE-Gbm 9 204 811. Derartige Anordnungen eignen sich z.B. zum Antrieb von Gebläsen, wie sie aus der DE 41 41 106 A1 bekannt sind und die von einem kollektorlosen Gleichstrommotor angetrieben werden.

An derartige Anordnungen werden verschiedene Forderungen gestellt. U.a. muß die Drehzahl des Gebläses in Abhängigkeit von der erforderlichen Wärmemenge geregelt werden, um eine optimale Verbrennung des Brennstoffs (Öl oder Gas) und dadurch minimale Schadstoffe im Abgas zu erreichen. Für einen derartigen drehzahlgeregelten Betrieb eignen sich Gleichstrommotoren besonders gut, insbesondere solche, die in Vollbrückenschaltung betrieben werden, da dies einen weiten Regelbereich und einfache Regeleingriffe ermöglicht. Dies gilt besonders für sogenannte zweipulsige kollektorlose Gleichstrommotoren, wie sie z.B. die DE 23 46 380 C3 (US 3 873 897) zeigt. Werden solche Motoren einsträngig (einphasig) ausgelegt, so ergibt sich eine sehr einfache Schaltung, und eine einfache Konstruktion des Motors, da in diesen nur eine einzige Statorwicklung eingebracht werden muß und er folglich klein gebaut werden kann. Es sei aber hier angemerkt, daß sich die Erfindung in gleicher Weise auch für mehrsträngige Motoren eignet, z.B. für dreisträngige Motoren, die dreipulsig oder sechspulsig betrieben werden.

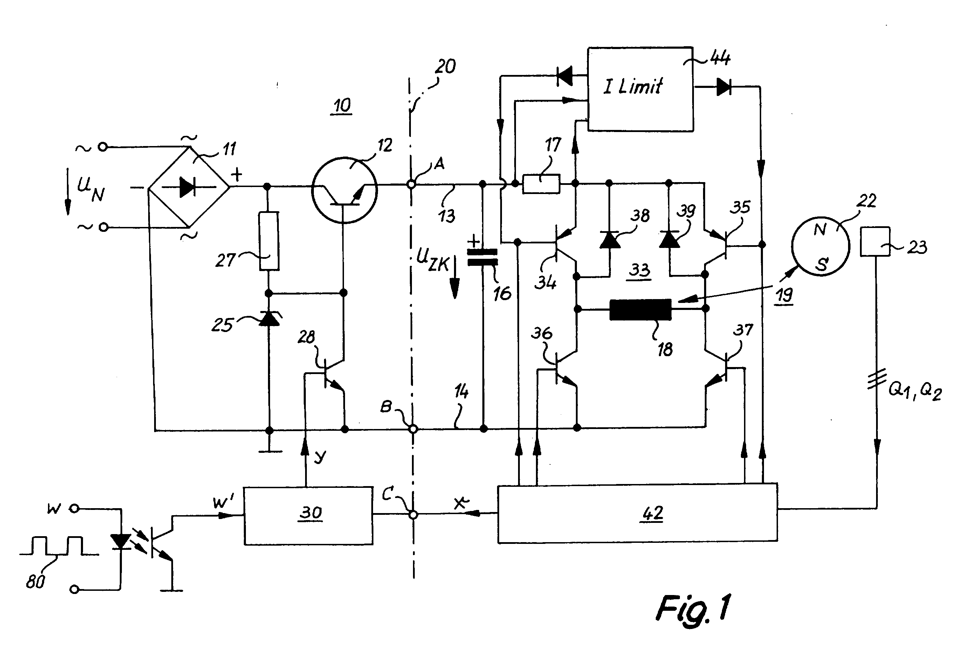

Zu diesen Begriffen vergleiche die Literaturstelle asr-digest für angewandte Antriebstechnik, 1977, Seiten 27 bis 31. Zweipulsig bedeutet z.B., daß der Statorwicklung des Motors pro Rotordrehung von 360° el. zwei Stromimpulse zugeführt werden, wie das bei dem Motor in der nachfolgenden Figur 1 der Fall ist. Bei einem dreipulsigen Motor werden der Statorwicklung pro Rotordrehung von 360° el. drei Stromimpulse zugeführt etc. Einsträngig bedeutet, daß der Motor nur eine Phase (Strang) hat, wie z.B. nachfolgend in Fig. 1 dargestellt. Zweisträngig bedeutet, daß der Motor zwei Phasen hat, etc. Zur Definition eines elektronisch kommutierten Motors sollte sowohl die Pulszahl wie die Zahl der Phasen angegeben werden.

Bei Vollbrückenschaltungen mit Transistoren werden im einen Brückenzweig pnp-Transistoren und im anderen Brückenzweig npn-Transistoren verwendet. Während es npn-Transistoren mit einer Spannungsfestigkeit bis zu 400 V gibt, liegt die höchste Spannungsfestigkeit von pnp-Transistoren gewöhnlich bei ca. 300 V, maximal 350 V.

Es ist deshalb zwar möglich, derartige Motoren mittels MOSFET-Transistoren an einer gleichgerichteten Wechselspannung von 230 V Wechselstrom zu betreiben, vgl. die EP 467 085 A1, nicht aber mit einer Transistor-Vollbrückenschaltung, obwohl dies aus Kostengründen wünschenswert wäre. Denn bei Gleichrichtung von 230 V Wechselspannung, und 10 % Überspannung, wie sie in Netzen häufig auftreten, erhält man auf der Gleichspannungsseite Spitzenspannungen von 358 V, und es gibt keine pnp-Transistoren mit einer Spannungsfestigkeit in dieser Größenordnung.

Aus der US 4 588 933 ist noch eine Steuerung für einen kollektorlosen Gleichstrommotor mit einer Schutzschaltung bekannt, die die Motorsteuerung vor Überspannungen schützt. Diese Schutzschaltung umfaßt einen zwischen Stromversorgung und Motorsteuerschaltung angeordneten npn-Längstransistor (als konstant wirkender Widerstand) , sowie Begrenzungsmittel zur Spannungsbegrenzung am Steuereingang des Längstransistors auf einen "festen Wert" als Schutz gegen Überspannungen.

Deshalb ist es eine Aufgabe der Erfindung, eine neue Anordnung mit einem über eine Halbleiteranordnung kommutierten kollektorlosen Gleichstrommotor bereitzustellen.

Nach der Erfindung wird diese Aufgabe gelöst durch eine Anordnung mit einem über eine Halbleiteranordnung kommutierten kollektorlosen Gleichstrommotor, mit einem über einen Gleichrichter aus einem Wechsel- oder Drehstromnetz speisbaren Gleichstrom-Zwischenkreis, an dessen Eingang im Betrieb eine wellige Gleichspannung mit vorgegebenen Maximalwerten liegt, mit einem zwischen dem Gleichrichter und dem kollektorlosen Gleichstrommotor liegenden Längstransistor, welcher als variabler Widerstand betrieben wird, und mit Begrenzungsmitteln zur Begrenzung der Spannung am Steuereingang dieses Längstransistors auf einen Wert, welcher kleiner ist als die vorgegebenen Maximalwerte der welligen Gleichspannung und welcher im Bereich der Spannungsfestigkeit der Halbleiteranordnung des kollektorlosen Gleichstrommotors liegt. Durch die Begrenzungsmittel in Verbindung mit dem Längstransistor wird die Spannung im Gleichstrom-Zwischenkreis auf einen Höchstwert nach oben begrenzt, z.B. auf 270 V, wie er durch die Begrenzungsmittel vorgegeben wird, so daß handelsübliche pnp- und npn-Transistoren für die Halbleiteranordnung zur Kommutierung des kollektorlosen Gleichstrommotors verwendet werden können, und auf diese Weise wird die Halbleiteranordnung vor Überspannungen geschützt. Im Längstransistor, der hier als variabler Widerstand betrieben wird, entstehen zwar entsprechende Verluste, aber dafür entfallen die Verluste, wie sie sonst in einem entsprechenden Netzteil für Niederspannung entstehen würden, so daß sich insgesamt ein sehr guter Wirkungsgrad ergibt.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den übrigen Unteransprüchen. Es zeigt:
- Fig. 1: ein Schaltbild einer erfindungsgemäßen Anordnung, in welchem die Kommutierungsanordnung, der Drehzahlregler, und der kollektorlose Gleichstrommotor nur schematisch dargestellt sind,
- Fig. 2: ein Schaltbild einer Drehzahl-Regelanordnung, wie sie bei der Anordnung nach Fig. 1 mit Vorteil verwendet werden kann,
- Fig. 3: ein Schaubild zur Erläuterung der Wirkungsweise der Fig. 2,
- Fig. 4: ein Schaltbild eines sogenannten Hall-IC mit zwei antivalenten Ausgängen, welcher so ausgelegt ist, daß im Bereich der Kommutierung eine kleine Stromlücke entsteht,
- Fig. 5: Schaubilder zur Erläuterung der Wirkungsweise des Hall-IC der Fig. 4,
- Fig. 6: eine erste Variante zu Fig. 1, und
- Fig. 7: eine zweite Variante zu Fig. 1.

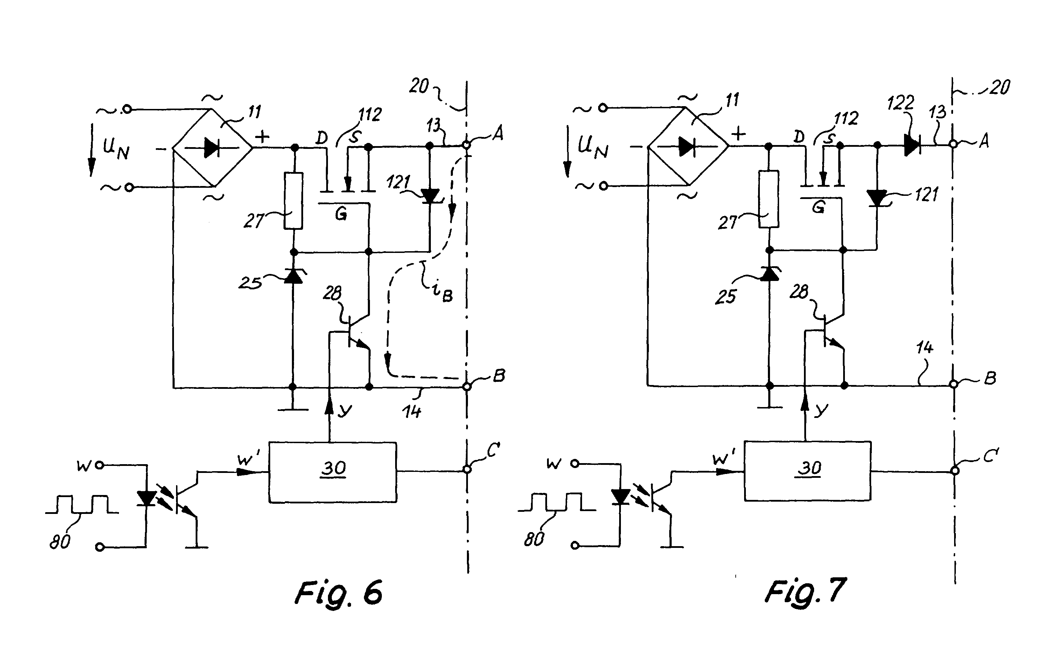

Fig. 1 zeigt eine erfindungsgemäße Anordnung 10. Diese hat einen üblichen Brückengleichrichter 11 zur Gleichrichtung der Netz-Wechselspannung U_{N} von z.B. 230 V, 50 Hz. Dadurch ergibt sich an den Ausgängen + und - des Gleichrichters 11 im Betrieb eine pulsierende Gleichspannung. Diese wird über einen Längstransistor 12 einem Gleichstrom-Zwischenkreis 13 (+) und 14 (-) zugeführt, an welchem im Betrieb eine Zwischenkreisspannung U_{ZK} liegt. In Fig. 1 ist zwischen dem Längstransistor 12 und dem Gleichstrom-Zwischenkreis 13, 14 eine symbolische Trennungslinie 20 eingezeichnet, in welche, wie dargestellt, die Verbindungspunkte A, B und C eingezeichnet sind. Auf diese Trennungslinie 20 und die Verbindungspunkte A, B und C wird in den Fig. 6 und 7 Bezug genommen.

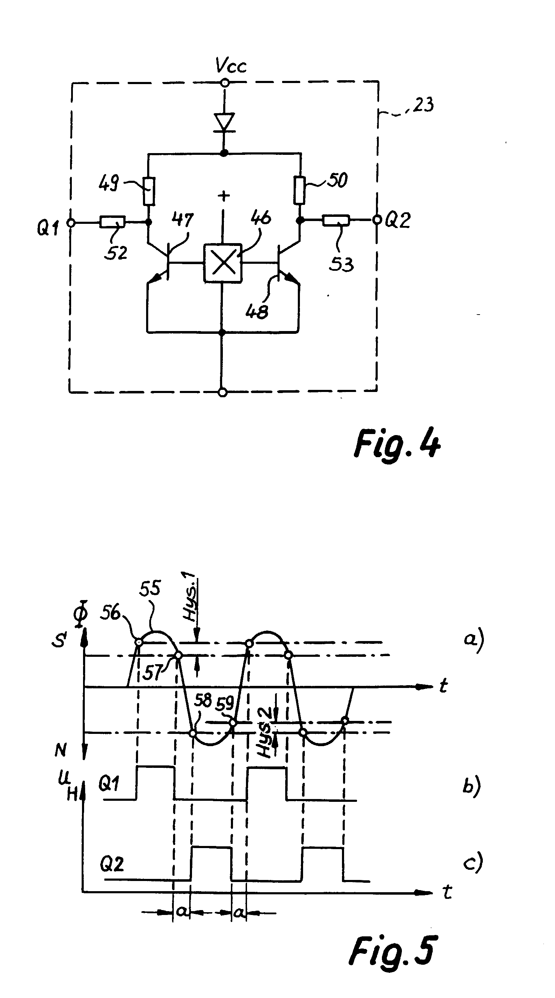

Die Spannung U_{ZK} wird geglättet von einem Kondensator 16. Ein Meßwiderstand 17 dient zur Messung des Stromes, der zur einzigen Statorwicklung 18 eines kollektorlosen Gleichstrommotors 19 fließt, dessen permanentmagnetischer Rotor bei 22 schematisch angedeutet ist. Es handelt sich hier bevorzugt um einen zweipulsigen, einsträngigen kollektorlosen Gleichstrommotor; zu den Begriffen vergleiche die eingangs genannte Literaturstelle asr-digest. Zur Erfassung der Stellung des Rotors 22 hat der Motor 19 einen Rotorstellungssensor 23, dessen bevorzugter Aufbau als Hall-IC aus den Fig. 4 und 5 hervorgeht.

Der npn-Längstransistor 12 ist als Emitterfolger geschaltet, d.h. sein Kollektor liegt am Ausgang + des Gleichrichters 11, sein Emitter an der Leitung 13 des Gleichstrom-Zwischenkreises 13, 14. Seine Basis ist mit der Katode einer Zenerdiode 25 verbunden, deren Anode an der Minusleitung 14 liegt, welch letztere mit Masse verbunden ist.

Es ist eine Eigenschaft eines Transistors, der als Emitterfolger geschaltet ist, daß er die Spannung, die an seiner Basis anliegt, auf seinen Emitterkreis abbildet. Deshalb bildet hier der Längstransistor 12 die Spannung an der Zenerdiode 25 auf den Gleichstrom-Zwischenkreis 13, 14 ab, d.h. die Spannung U_{ZK} kann nicht über diesen Maximalwert hinaus ansteigen, der z.B. 270 V betragen kann.

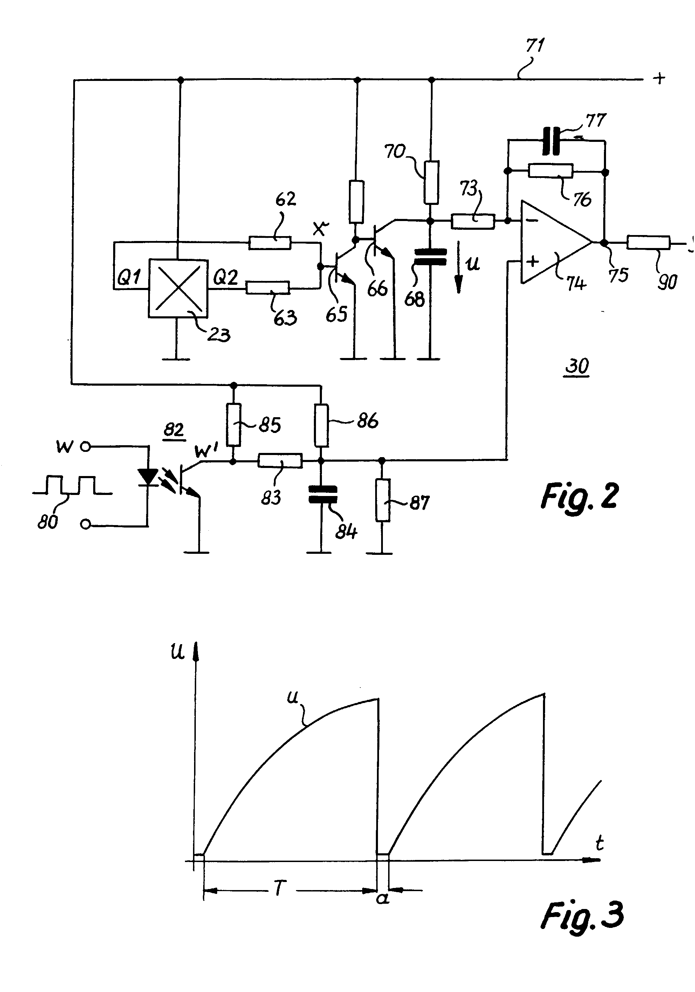

Um die Drehzahl des Motors 19 regeln zu können, kann die Spannung an der Zenerdiode 25 mittels eines Spannungsteilers reduziert werden, der von einem Widerstand 27 (zwischen der Zenerdiode 25 und dem Kollektor des Längstransistors 12) und einem npn-Stelltransistor 28 gebildet wird, dessen Kollektor mit der Basis des Längstransistors 12 und dessen Emitter mit der Leitung 14 verbunden ist, während seiner Basis im Betrieb ein Signal Y von einem Drehzahlregler 30 zugeführt wird, dessen bevorzugter Aufbau in Fig. 2 dargestellt ist. Wie man erkennt, kann durch geeignete Steuerung des Stelltransistors 28 die Spannung an der Zenerdiode 25 reduziert werden, wodurch auch die Spannung U_{ZK} entsprechend sinkt. Dies ermöglicht in sehr einfacher Weise eine rasch ansprechende Drehzahlregelung.

Zur Reduzierung der Verlustleistung im Stelltransistor 28 ist der Längstransistor 12 mit Vorteil ein Darlington-Transistor. Der Widerstand 27 wird bevorzugt so bemessen, daß der Längstransistor 12 niemals voll eingeschaltet werden kann. So ergibt sich ein Spannungsabfall über dem Längstransistor 12, und dieser begrenzt bei normalem Betrieb die Spannung U_{ZK}. Die Zenerdiode 25 dient nur als zusätzliche Sicherheit, denn die Stromverstärkungsfaktoren der Längstransistoren 12 haben große Streuungen.

Der Kondensator 16 glättet die Spannung U_{ZK} und nimmt die Freilaufströme der Statorwicklung 18 während deren Kommutierung oder deren Strombegrenzung auf, was den Wirkungsgrad verbessert. Der Kondensator 16 wird immer nur bis zu der durch den Längstransistor 12 und dessen Basisspannung vorgegebenen Spannung aufgeladen. Je nach seiner Kapazität ergibt sich eine entsprechende Restwelligkeit der Spannung U_{ZK}. Diese Kapazität sollte so groß gewählt sein, daß sich die Frequenz der Welligkeit (ripple) von U_{ZK} nicht auf die Drehzahl des Motors überträgt.

Zur Ansteuerung der Statorwicklung 18 dient eine Vollbrückenschaltung 33. Diese hat die übliche H-Form, wobei in den oberen Brückenzweigen zwei pnp-Transistoren 34, 35 und in den unteren Brückenzweigen zwei npn-Transistoren 36, 37 liegen. Die Spannungsfestigkeit der Transistoren 34, 35 beträgt etwa 300 V. Zu ihnen sind Freilaufdioden 38, 39 antiparallel geschaltet, die bei der Kommutierung und während der Strombegrenzung wirksam werden. Die Wicklung 18 liegt, wie dargestellt, im Querzweig des H. Sind die Transistoren 34 und 37 leitend, so fließt deshalb in ihr ein Strom von links nach rechts, und sind die Transistoren 35 und 36 leitend, so fließt in ihr ein Strom von rechts nach links. Die Richtung dieses Stromes ist abhängig von der jeweiligen Lage des Rotors 22.

Die Kommutierung wird gesteuert durch den Rotorstellungssensor 23, dessen Signale Q1, Q2 einer Kommutierungsschaltung 42 zugeführt werden, welche die Transistoren 34 bis 37 entsprechend steuert und beim Kommutierungsvorgang für kurze Strompausen sorgt, so daß niemals alle Transistoren 34 bis 37 der Brücke 33 gleichzeitig eingeschaltet sind. (Ein dabei entstehender Kurzschluß würde die Transistoren 34 bis 37 sofort zerstören.) Diese Strompausen werden im Rotorstellungssensor 23 erzeugt, dessen Ausgangssignale Q1, Q2 jeweils durch eine Lücke a voneinander getrennt sind, die entsprechende Strompausen bewirken. Diese Strompausen werden bevorzugt auch für die Drehzahlregelung verwendet. - Während der Kommutierung kann jeweils der Strom durch die Wicklung 18 über eine der beiden Freilaufdioden 38, 39 in den Kondensator 16 zurückfließen (Energie-Rückgewinnung).

Der Motorstrom wird durch eine Strombegrenzungsanordnung 44 begrenzt, welche den Strom am Meßwiderstand 17 auswertet und die beiden oberen Brückentransistoren 34, 35 unterbricht, wenn dieser Strom zu groß wird. Alternativ kann sie stattdessen die beiden unteren Brückentransistoren 36, 37 unterbrechen, was u.U. vorteilhafter ist, da an der Leitung 13 ein Potential von + 270 V liegt, an der Leitung 14 dagegen ein Potential von Null V. Eine entsprechende Schaltung zur Strombegrenzung ist im DE-GM 9 204 811 ausführlich beschrieben.

Fig. 4 zeigt eine bevorzugte Ausführungsform des Rotorstellungssensors 23. Die Ausgangssignale seines Hallelements 46 werden jeweils durch einen zugeordneten Transistor 47 bzw. 48 verstärkt, von denen jeder einen Kollektorwiderstand 49 bzw. 50 hat, die gemeinsam über eine Diode an + liegen. Zu den Ausgängen Q1 und Q2 führt jeweils ein Widerstand 52 bzw. 53.

Ändert sich die Magnetflußdichte 0̸ am Hallelement 46 gemäß der Kurve 55 in Fig. 5a, so wird der Transistor 47 bei 56 eingeschaltet und - infolge der Schalthysterese Hys.1 - bei 57 wieder ausgeschaltet, also bei einer kleineren Magnetflußdichte. Dies ergibt das Signal Q1.

Analog wird der Transistor 48 bei 58 ein- und bei 59 wieder ausgeschaltet, wobei sich auch hier diese Punkte um die Schalthysterese Hys.2 unterscheiden. Dies ergibt das Signal Q2. Die Signale Q1, Q2 haben folglich zwischen sich die bereits erwähnten Lücken a, deren Größe naturgemäß von der Form der Magnetsierung des Rotors 22 abhängt, die aber in jedem Fall vorhanden sind, wie der Fachmann ohne weiteres erkennt.

Gemäß Fig. 2 werden die Signale Q1 und Q2 des Sensors 23 über zwei gleiche Widerstände 62, 63 in der Kommutierungsschaltung 42 logisch miteinander verknüpft. Am Ausgang dieser Widerstände liegt das Signal X (Fig. 1) an, das also die Signale Q1 und Q2 nach Art einer UND-Verknüpfung verknüpft und nur während der Lücken a niedrig ist. Dieses niedrige Signal dient als Drehzahlsignal. Es wird sofort wieder hoch, wenn eines der Signale Q1 oder Q2 vorhanden ist.

Dieses Signal X wird gemäß Fig. 2 einem npn-Transistor 65 zugeführt, welcher folglich nur während der Pausen a (Fig. 3 und 5) gesperrt ist. Solange der Transistor 65 gesperrt ist, ist der an ihn angeschlossene Transistor 66 leitend und entlädt sehr schnell einen zu ihm parallel liegenden Kondensator 68, der ständig über einen Ladewiderstand 70 von einer positiven Leitung 71 aus aufgeladen wird. Nach dem Ende der Lücke a, also nach dem Ende der Entladung, beginnt sich der Kondensator 68 wieder zu laden und wird bis zur nächsten Lücke a über den Widerstand 70 aufgeladen. Die Spannung u am Kondensator 68 ist in Fig. 3 dargestellt. Wie man ohne weiteres versteht, ist die Zeit T (Fig. 3) bei niedrigen Drehzahlen länger, und die Spannung u am Kondensator 68 kann folglich bei niedrigen Drehzahlen auf höhere Werte ansteigen als bei hohen Drehzahlen. Die Spitzenspannung am Kondensator 68 ist also eine Funktion der Drehzahl, d.h. wenn diese steigt, nimmt die Spitzenspannung ab. Diese Spannung wird über einen Widerstand 73 dem - Eingang eines Operationsverstärkers 74 zugeführt, der als Differenzverstärker und Integrator geschaltet ist. Zu diesem Zwecke ist zwischen seinem Ausgang 75 und seinem - Eingang die Parallelschaltung eines Widerstands 76 und eines Kondensators 77 geschaltet.

Das Sollwertsignal 80 für die Drehzahl ist ein impulsweitenmoduliertes Signal (PWM-Signal), das dem Eingang w eines Optokopplers 82 zugeführt wird, an dessen Ausgang folglich ein entsprechendes Signal w' anliegt. Die Information dieses Signals liegt im Tastverhältnis, vgl. das DE-Gbm 9 204 811, und diese Information kann verschiedene Funktionen des Motors 19 steuern, wie in diesem Gebrauchsmuster ausführlich beschrieben.

Das Signal w' wird durch den Widerstand 83 und den Kondensator 84 integriert und in eine Gleichspannung umgewandelt, deren Höhe vom Tastverhältnis abhängig ist. Diese Gleichspannung wird dem + Eingang des Operationsverstärkers 74 zugeführt. Widerstände 85, 86 und 87, vgl. Fig. 2, dienen zur Pegelanpassung für den Eingang des Operationsverstärkers 74.

### Arbeitsweise von Fig. 2

Die Differenz des Drehzahl-Sollwertsignals (Spannung am Kondensator 84) und des Drehzahl-Istwertsignals (Spannung u am Kondensator 68) wird im Operationsverstärker 74 verstärkt und durch den Kondensator 77 integriert. Durch die Integration ergibt sich am Ausgang 75 des Operationsverstärkers 74 ein Gleichspannungssignal Y, das über den Widerstand 90 den Stelltransistor 28 (Fig. 1) linear ansteuert, so daß beim Regelvorgang der Widerstand des Längstransistors 12 entsprechend verändert wird, um die Spannung U_{ZK} entsprechend zu erhöhen oder zu reduzieren.

Der Drehzahlregler nach Fig. 2 ist ein P-Regler. Sein Verstärkungsfaktor (P-Anteil) wird durch das Verhältnis der Widerstände 73 und 76 eingestellt.

Fig. 6 zeigt eine erste Variante zur Schaltung nach Fig. 1. Es sind nur die Teile neu dargestellt, die sich in Fig. 1 links von der symbolischen Trennungslinie 20 befinden. Die Teile rechts von der Trennungslinie 20 stimmen mit Fig. 1 überein. Dies gilt ebenso für Fig. 7, die eine zweite Variante zu Fig. 1 zeigt.

Bei den Fig. 6 und 7 ist der bipolare Längstransistor 12 ersetzt durch einen Leistungs-MOSFET 112 (hier ein n-Kanal MOSFET), der hier noch besser geeignet ist als ein bipolarer Leistungstransistor. Dies hat seinen Grund darin, daß bei einem MOSFET 112 nur das "temperature derating" beachtet werden muß, während bei einem bipolaren Leistungstransistor noch zusätzlich die "safe operating area" (sichere Betriebsbereich) für den zweiten Durchbruch beachtet werden muß. Es hat sich bei Versuchen gezeigt, daß ein Leistungs-MOSFET hier die bessere Lösung ist. Zum Schutze des MOSFET sollte eine Zenerdiode 121 zwischen Source S (Leitung 13) und Gate G des MOSFET 112 angeordnet werden, wie in Fig. 6 und 7 dargestellt.

Der Drain D des MOSFET 112 ist mit dem Ausgang (+) des Gleichrichters 11 verbunden, die Source S mit der Leitung 13, und das Gate G mit dem Kollektor des Stelltransistors 28. Diese Schaltung arbeitet völlig analog zur Schaltung nach Fig. 1, d.h. die Spannung an der Source S folgt der Spannung am Gate G genauso, wie bei der Emitterschaltung nach Fig. 1 die Spannung am Emitter des Transistors 12 der Spannung an der Basis folgt. Beträgt z.B. die Spannung am Gate G 100 V, so beträgt die Spannung an der Source etwa 95 V, nämlich die Gatespannung abzüglich der Gate-Source-Schwellenspannung von etwa 4,5 V. In Analogie zur "Emitterschaltung" könnte man deshalb diese Schaltung als "Source-Schaltung" bezeichnen. Für den Fachmann ist klar, daß es sich im Prinzip um die gleiche Schaltung handelt, wobei aber nur im einen Fall eine geläufige Bezeichnung vorhanden ist.

Bei der Schaltung nach Fig. 6 ergibt sich eine besonders gute Regelcharakteristik. Wird nämlich durch abrupte Änderung des Sollwertsignals 80 bei einer hohen Drehzahl plötzlich ein Sollwert für eine niedere Drehzahl vorgegeben, so wird der Motor durch die Schaltung nach Fig. 6 gebremst. In diesem Fall wird nämlich der Transistor 28 voll leitend, und die Zenerdiode 121 wird in Vorwärtsrichtung betrieben, so daß ein Bremsstrom i_{B} fließt, wie er in Fig. 6 symbolisch eingezeichnet ist. Dieser Bremsstrom i_{B} leitet die im Kondensator 16 (Fig. 1) gespeicherte Energie nach Masse ab, wodurch der Motor 19 gebremst wird, da er in diesem Fall im generatorischen Betrieb und praktisch im Kurzschluß betrieben wird. Wenn ein solcher Bremsbetrieb gewünscht wird, müssen die Zenerdiode 121 und der Stelltransistor 28 für eine entsprechende Leistung ausgelegt werden.

Es ist darauf hinzuweisen, daß dieser Bremsbetrieb auch bei der Schaltung nach Fig. 1 auftritt, da dort die Basis-Emitter-Strecke des Längstransistors 12 in diesem Fall wie eine Zenerdiode wirkt, so daß auch dort ein Bremsstrom fließt.

Falls ein Bremsbetrieb nicht gewünscht wird, um die höheren Kosten für den Stelltransistor 28 zu vermeiden, wird gemäß Fig. 7 eine Diode 122 zwischen den MOSFET 112 und den Punkt A geschaltet. Sie sperrt das Fließen des in Fig. 6 dargestellten Stromes i_{B}. Wird die erfindungsgemäße Schaltung z.B. zum Antrieb des Motors 19 eines Gebläses (nicht dargestellt) verwendet, so ist ein schneller Bremsvorgang unnötig, da das Gebläse von sich aus langsamer wird, wenn ihm weniger Energie zugeführt wird. Die Diode 122 kann in gleicher Weise auch bei der Schaltung nach Fig. 1 verwendet werden, um das Fließen eines Bremsstroms zu verhindern.

Beispielhaft können für die Komponenten der Schaltung nach Fig. 7 folgende Werte angegeben werden:
U_{N} = 230 V, 50 Hz

| | |
|---|---|
| MOSFET 12 | P4N40FI, Hersteller SGS-Thomson |
| Zenerdiode 121 | 12 V |
| Zenerdiode 25 | 270 V |
| Widerstand 27 | 100 kOhm |
| Transistor 28 | MPSA44 |

Da die Regelelektronik - mit dem Längstransistor 12 oder dem MOSFET-Längstransistor 112 - keine impulsartigen Signale verwendet, sondern gleitende Änderungen, treten auf den Zuleitungen der Anordnung 10 nur sehr geringe elektrische Störungen auf, und man benötigt keine zusätzlichen Filter zur Einhaltung der gesetzlich vorgeschriebenen Grenzwerte, der sogenannten EMV-Grenzwerte.

Naturgemäß muß die Endstufe 33 nicht unbedingt eine Vollbrücke sein. Z.B. wäre auch eine zweisträngige Lösung möglich, wie sie in der EP 0 467 085 A1 dargestellt ist. In diesem Fall kann die Spannung U_{ZK} höher sein, so daß die Verluste im Längstransistor 12 bzw. 112 kleiner werden. Die dargestellten Lösungen werden aber bevorzugt. Ebenso sind andere Variationen möglich. Z.B. könnte als Drehzahlsignal die positive Flanke des Q1-Signals verwendet werden, und es könnten naturgemäß auch andere Arten von Rotorstellungssensoren verwendet werden, oder auch elektronische Motoren ohne Rotorstellungssensor, bei welchen die Rotorstellung aus den Motorströmen oder sonstigen Werten errechnet wird (sogenanntes Sensorless-Prinzip).

Ein ganz wichtiger Vorzug der vorliegenden Erfindung ist der Wegfall eines Netzteils zur Stromversorgung des Motors 19 mit Niederspannung. Hierdurch ergibt sich eine beachtliche Kostenersparnis. Ihr steht gegenüber eine Erhöhung der Kosten durch die erhöhte Isolationsklasse für die Wicklung 18, und durch die Verwendung von Leistungstransistoren mit erhöhter Spannungsfestigkeit, sowie durch die Verwendung eines entsprechend leistungsfähigen Längstransistors 12 bzw. 112. Insgesamt ergibt sich aber eine erhebliche Einsparung an Kosten - und auch an Bauvolumen - durch die vorliegende Erfindung, so daß diese vielfältig anwendbar ist, z.B. für Lüfter, Staubsauger, Scanner, Pumpen, medizintechnische Geräte, Gebläse für Gas- und Ölbrenner, und andere. Die Erfindung hat also ein sehr breites Anwendungsspektrum, da sie auch eine einfache Drehzahlregelung und Strombegrenzung ermöglicht. Besonders vorteilhaft ist sie naturgemäß in Verbindung mit einem einsträngigen kollektorlosen Gleichstrommotor, da hierbei der Aufwand für die Elektronik, und auch für die Isolation der Wicklung 18, besonders klein wird.

## Patentansprüche

1. Anordnung mit einem über eine Halbleiteranordnung (34, 35, 36, 37) kommutierten kollektorlosen Gleichstrommotor (19),
mit einem über einen Gleichrichter (11) aus einem einem Wechsel- oder Drehstromnetz speisbaren Gleichstrom-Zwischenkreis (13, 14), an dessen Eingang im Betrieb eine wellige Gleichspannung mit vorgegebenen Maximalwerten vorliegt,
mit einem zwischen dem Gleichrichter (11) und dem kollektorlosen Gleichstrommotor (19) liegenden Längstransistor (12, 112), welcher als variabler Widerstand betrieben wird,
und mit Begrenzungsmitteln (25, 27, 28) zur Begrenzung der Spannung am Steuereingang dieses Längstransistors (12, 112) auf einen Wert,
- welcher kleiner ist als die vorgegebenen Maximalwerte der welligen Gleichspannung,
- und welcher im Bereich der Spannungsfestigkeit der Halbleiteranordnung (34, 35, 36, 37) des kollektorlosen Gleichstrommotors (19) liegt, wobei die Spannung an den Begrenzungsmitteln (25, 27, 28) variierbar ist, um den Widerstandswert des Längstransistors (12, 112) gleitend zu ändern.

2. Anordnung nach Anspruch 1, bei welcher der Längstransistor (12) ein bipolarerTransistor in Emitterschaltung ist.

3. Anordnung nach Anspruch 1, bei welcher der Längstransistor (112) ein MOSFET ist, bei welchem die Drain-Source-Strecke zwischen einem Ausgang (+) des Gleichrichters (11) und dem kollektorlosen Gleichstrommotor (19) liegt und die Begrenzungsmittel (25, 27, 28) zwischen dem Gate des MOSFET (112) und dem anderen Ausgang (-) des Gleichrichters (11) liegen.

4. Anordnung nach Anspruch 3, bei welcher parallel zur Source-Gate-Strecke des MOSFET (112) eine Zenerdiode (121) vorgesehen ist.

5. Anordnung nach Anspruch 1, bei welcher zwischen dem Längstransistor (12, 112) und dem kollektorlosen Gleichstrommotor (19) eine Diode (122) vorgesehen ist, welche das Fließen eines Bremsstroms (i_{B}) vom Motor (19) zum Längstransistor (12, 112) verhindert.

6. Anordnung nach mindestens einem der vorhergehenden Ansprüche, bei welcher im Gleichstrom-Zwischenkreis (13, 14) ein Glättungskondensator (16) angeordnet ist, welcher so bemessen ist, daß er Drehzahlschwankungen des Motors (19) infolge Welligkeit der Gleichspannung (U_{ZK}) im Gleichstrom-Zwischenkreis (13, 14) mindestens nahezu verhindert.

7. Anordnung nach einem oder mehreren der vorhergehenden Ansprüche, bei welcher die Begrenzungsmittel ein Spannungsbegrenzungsglied (25) aufweisen, zu welchem ein Teil einer Spannungsteilerschaltung (27, 28) parallel geschaltet ist, welche Spannungsteilerschaltung (27, 28) ein Stellelement, insbesondere einen Stelltransistor (28) enthält, dessen Widerstand steuerbar ist.

8. Anordnung nach Anspruch 7, bei welcher das Stellelement (28) mit dem Ausgang (Y) eines Reglers verbunden ist, insbesondere mit dem Ausgang eines Drehzahlreglers (30).

9. Anordnung nach Anspruch nach Anspruch 8, bei welcher der Drehzahlregler (30) sein Drehzahlsignal (X) von einem Rotorstellungssensor (23) des kollektorlosen Gleichstrommotors (19) erhält.

10. Anordnung nach Anspruch 9, bei welcher der Rotorstellungssensor (23) zwei Signale (Q1, Q2) abgibt, welche jeweils durch Lücken (a) voneinander getrennt sind, wobei die Signale logisch miteinander verknüpft werden und das dabei gebildete Verknüpfunssignal (X) als Drehzahlsignal dient.

11. Anordnung nach Anspruch 9 oder 10, bei welcher ein Ladekondensator (68) vorgesehen ist, dem im Betrieb ein Ladestrom (Widerstand 70) zuführbar ist,
und mit einem Entladeglied (66) zum wiederholten kurzzeitigen Entladen dieses Ladekondensators (68) in einem zur Drehzahl des Motors (19) proportionalen Takt.

12. Anordnung nach Anspruch 11, bei welcher die Spannung am Ladekondensator (68) einem Eingang eines als Integrator und Differenzverstärker geschalteten Operationsverstärkers (74) zuführbar ist, dessen anderem Eingang ein Sollwertsignal zuführbar ist und dessen Ausgangssignal (Y) den Längstransistor (12) durch gleitende Veränderung von dessen Widerstandswert steuert.

13. Anordnung nach einem oder mehreren der vorhergehenden Ansprüche, bei welcher die Halbleiteranordnung des kollektorlosen Gleichstrommotors als Vollbrückenschaltung (33) ausgebildet ist.

14. Anordnung nach Anspruch 13, bei welcher die Halbleiterelemente der Vollbrückenschaltung (33) als Leistungstransistoren (34, 35, 36, 37) ausgebildet sind, deren Spannungsfestigkeit mindestens teilweise etwa 300 V beträgt.

15. Anordnung nach einem oder mehreren der vorhergehenden Ansprüche, bei welcher die Spannungsfestigkeit von Leistungstransistoren (34, 35, 36, 37) der Halbleiteranordnung (33) kleiner ist als die Maximalwerte der am Ausgang des Netzgleichrichters (11) vorliegenden welligen Gleichspannung.

16. Anordnung nach einem oder mehreren der vorhergehenden Ansprüche, bei welcher der kollektorlose Gleichstrommotor als zweipulsig betriebener einsträngiger Motor (19) ausgebildet ist.

17. Verwendung einer Anordnung nach einem oder mehreren der vorhergehenden Ansprüche zum Antrieb des Gebläsemotors in einem Gas- oder Ölbrenner.

## Claims

1. Arrangement with a commutatorless direct-current motor (19) commutated by means of a semiconductor arrangement (34, 35, 36, 37),
with a direct-current intermediate circuit (13, 14) which can be fed from an alternating-current or three-phase current power supply through a rectifier (11) and at whose input when in operation there is a pulsating direct-current voltage with predetermined maximum values,
with a series transistor (12, 112) which lies between the rectifier (11) and the commutatorless direct-current motor (19) and is operated as a variable resistance,
and with limiting means (25, 27, 28) for limiting the voltage at the control input of this series transistor (12, 112) to a value
- which is less than the predetermined maximum values of the pulsating direct-current voltage,
- and which lies in the range of the dielectric strength of the semiconductor arrangement (34, 35, 36, 37) of the commutatorless direct-current motor (19), the voltage at the limiting means (25, 27, 28) being variable in order to alter the resistance value of the series transistor (12, 112) continuously.

2. Arrangement according to claim 1 in which the series transistor (12) is a bipolar common-emitter transistor.

3. Arrangement according to claim 1 in which the series transistor (112) is a MOSFET in which the drain-source junction lies between one output (+) of the rectifier (11) and the commutatorless direct-current motor (19) and the limiting means (25, 27, 28) lie between the gate of the MOSFET (112) and the other output (-) of the rectifier (11).

4. Arrangement according to claim 3 in which a zener diode (121) is provided parallel to the source-gate junction of the MOSFET (112).

5. Arrangement according to claim 1 in which a diode (122) is provided between the series transistor (12, 112) and the commutatorless direct-current motor (19), which diode prevents the flow of a braking current (i_{B}) from the motor (19) to the series transistor (12, 112).

6. Arrangement according to at least one of the preceding claims in which a smoothing capacitor (16) is disposed in the direct-current intermediate circuit (13, 14), which smoothing capacitor is of a size such that it at least almost prevents fluctuations in the speed of the motor (19) due to pulsation of the direct-current voltage (U_{ZK}) in the direct-current intermediate circuit (13, 14).

7. Arrangement according to one or more of the preceding claims in which the limiting means exhibit a voltage-limiting member (25) to which a part of a voltage-dividing circuit (27, 28) is connected in parallel, which voltage-dividing circuit (27, 28) contains a control element, in particular a control transistor (28), the resistance of which is controllable.

8. Arrangement according to claim 7 in which the control element (28) is connected to the output (Y) of a controller, in particular to the output of a speed controller (30).

9. Arrangement according to claim 8 in which the speed controller (30) receives its speed signal (X) from a rotor position sensor (23) of the commutatorless direct-current motor (19).

10. Arrangement according to claim 9 in which the rotor position sensor (23) emits two signals (Q1, Q2) which are in each case separated from one another by gaps (a), the signals being linked together logically and the linking signal (X) thus formed serving as the speed signal.

11. Arrangement according to claim 9 or 10 in which a charging capacitor (68) is provided to which a charging current (resistance 70) can be supplied when in operation,
and with a discharging member (66) for repeated momentary discharging of this charging capacitor (68) in a cycle proportional to the speed of the motor (19).

12. Arrangement according to claim 11 in which the voltage at the charging capacitor (68) can be fed to one input of an operation amplifier (74) which is connected as an integrator and differential amplifier and whose other input can be fed with a set value signal and whose output signal (Y) controls the series transistor (12) through continuous alteration of its resistance value.

13. Arrangement according to one or more of the preceding claims in which the semiconductor arrangement of the commutatorless direct-current motor is embodied as a full bridge circuit (33).

14. Arrangement according to claim 13 in which the semiconductor elements of the full bridge circuit (33) are embodied as power transistors (34, 35, 36, 37) the dielectric strength of which is at least in part roughly 300 V.

15. Arrangement according to one or more of the preceding claims in which the dielectric strength of power transistors (34, 35, 36, 37) of the semiconductor arrangement (33) is less than the maximum values of the pulsating direct-current voltage present at the output of the power supply rectifier (11).

16. Arrangement according to one or more of the preceding claims in which the commutatorless direct-current motor is embodied as a motor (19) with a single phase winding operated with two pulses.

17. Use of an arrangement according to one or more of the preceding claims for driving the fan motor in a gas or oil burner.

## Revendications

1. Montage avec un moteur à courant continu sans collecteur (19) commuté par un montage semi-conducteur (34, 35, 36, 37),
avec un circuit intermédiaire à courant continu (13, 14), qui peut être alimenté à partir d'un réseau en courant alternatif ou triphasé par l'intermédiaire d'un redresseur (11) et à l'entrée duquel est présente, en fonctionnement, une tension continue ondulée avec des valeurs maximales prédéfinies,
avec un transistor à passage longitudinal (12, 112), qui se trouve entre le redresseur (11) et le moteur à courant continu sans collecteur (19) et qui est exploité comme résistance variable,
et avec des moyens limiteurs (25, 27, 28) pour limiter la tension à l'entrée de commande de ce transistor à passage longitudinal (12, 112) à une valeur qui est inférieure aux valeurs maximales prédéfinies de la tension continue ondulée,
et qui se situe dans la plage de rigidité diélectrique du montage semi-conducteur (34, 35, 36, 37) du moteur à courant continu sans collecteur (19), la tension appliquée aux moyens limiteurs (25, 27, 28) pouvant être variée afin de modifier par glissement la valeur de résistance du transistor à passage longitudinal (12, 112).

2. Montage selon la revendication 1, dans lequel le transistor à passage longitudinal (12) est un transistor bipolaire en montage à émetteur commun.

3. Montage selon la revendication 1, dans lequel le transistor à passage longitudinal (112) est un transistor MOS à effet de champ, dans lequel le parcours drain-source se trouve entre une sortie (+) du redresseur (11) et le moteur à courant continu sans collecteur (19) et les moyens limiteurs (25, 27, 28) se trouvent entre la porte du transistor MOS à effet de champ (112) et l'autre sortie (-) du redresseur (11).

4. Montage selon la revendication 3, dans lequel une diode Zéner (121) est prévue parallèlement au parcours source-porte du transistor MOS à effet de champ (112).

5. Montage selon la revendication 1, dans lequel une diode (122), qui empêche l'écoulement d'un courant de freinage (i_{B}) du moteur (19) vers le transistor à passage longitudinal (12, 112), est prévue entre le transistor à passage longitudinal (12, 112) et le moteur à courant continu sans collecteur (19).

6. Montage selon au moins une des revendications précédentes, dans lequel un condensateur de filtrage (16) est disposé dans le circuit intermédiaire à courant continu (13, 14), condensateur qui est dimensionné de telle sorte qu'il empêche au moins quasiment des fluctuations de régime du moteur (19) par suite de l'ondulation de la tension continue (UzK) dans le circuit intermédiaire à courant continu (13, 14).

7. Montage selon une ou plusieurs des revendications précédentes, dans lequel les moyens limiteurs présentent un organe limiteur de tension (25) avec lequel est montée en parallèle une partie d'un montage diviseur de tension (27, 28), le montage diviseur de tension (27, 28) contenant un élément de réglage, notamment un transistor de réglage (28), dont la résistance peut être asservie.

8. Montage selon la revendication 7, dans lequel l'élément de réglage (28) est relié à la sortie (Y) d'un régulateur, notamment à la sortie d'un régulateur de régime (30).

9. Montage selon la revendication 8, dans lequel le régulateur de régime (30) reçoit son signal de régime (X) d'un capteur de position de rotor (23) du moteur à courant continu sans collecteur (19).

10. Montage selon la revendication 9, dans lequel le capteur de position de rotor (23) délivre deux signaux (Q1, Q2) qui sont séparés l'un de l'autre par des intervalles (a), les signaux pouvant être combinés logiquement entre eux et le signal logique (X) ainsi formé servant de signal de régime.

11. Montage selon la revendication 9 ou 10, dans lequel est prévu un condensateur de charge (68) auquel peut être apporté, en fonctionnement, un courant de charge (résistance 70), et avec un organe de décharge (66) pour la décharge temporaire répétée de ce condensateur de charge (68) selon une cadence proportionnelle au régime du moteur (19).

12. Montage selon la revendication 11, dans lequel la tension appliquée au condensateur de charge (68) peut être apportée à une entrée d'un amplificateur opérationnel (74) monté en intégrateur et amplificateur différenciateur, dont l'autre entrée peut recevoir un signal de valeur de consigne et dont le signal de sortie (Y) commande le transistor à passage longitudinal (12) en modifiant par glissement sa valeur de résistance.

13. Montage selon une ou plusieurs des revendications précédentes, dans lequel le montage semi-conducteur du moteur à courant continu sans collecteur est configuré en montage en pont intégral (33).

14. Montage selon la revendication 13, dans lequel les éléments semi-conducteurs du montage en pont intégral (33) sont réalisés sous la forme de transistors de puissance (34, 35, 36, 37) dont la rigidité diélectrique est au moins en partie égale à environ 300 V.

15. Montage selon une ou plusieurs des revendications précédentes, dans lequel la rigidité diélectrique des transistors de puissance (34, 35, 36, 37) du montage semi-conducteur (33) est inférieure aux valeurs maximales de la tension continue ondulée présente à la sortie du redresseur de réseau (11).

16. Montage selon une ou plusieurs des revendications précédentes, dans lequel le moteur à courant continu sans collecteur est réalisé sous la forme d'un moteur monobrin (19) en exploitation bipulsatoire.

17. Utilisation d'un montage selon une ou plusieurs des revendications précédentes pour l'entraînement du moteur de soufflante dans un brûleur à gaz ou à fuel.
